# EUROPÄISCHE PATENTSCHRIFT

(11) **EP 0 770 790 B1**
(45) Veröffentlichungstag und Bekanntmachung des Hinweises auf die Patenterteilung: **14.01.2004**
(21) Anmeldenummer: 96116648.5
(22) Anmeldetag: 17.10.1996
(51) Int. Cl.: F16D 48/02, F16D 25/0638, F16D 25/12

(54) **Ventil, und Reibscheibenkupplung**
Valve and friction disc clutch
Soupape et embrayage multi-disque à friction

(30) Priorität: 27.10.1995 DE 19539968
(43) Veröffentlichungstag der Anmeldung: 02.05.1997
(73) Patentinhaber: DEERE & COMPANY, Moline Illinois 61265-8098 (US)
(72) Erfinder: Schäfer, Helmut, 68775 Ketsch (DE)
(74) Vertreter: Magin, Ludwig Bernhard

(56) Entgegenhaltungen:
- EP-A- 0 190 822
- DE-A- 2 658 541
- DE-A- 3 723 673
- DE-A- 3 736 584
- FR-A- 2 596 830
- US-A- 3 016 121
- US-A- 3 602 347
- US-A- 3 719 322
- PATENT ABSTRACTS OF JAPAN vol. 16, no. 262 (M-1265), 15.Juni 1992 & JP 04 064720 A (MAZDA), 28.Februar 1992,

## Beschreibung

Die Erfindung betrifft ein Ventil zur Durchflußsteuerung von Flüssigkeiten mit einer Durchflußausnehmung in einem sich drehenden Bauteil, die außerhalb der Drehachse liegt und sich parallel zur Drehachse erstreckt. In der Durchflußausnehmung ist ein Ventilsitz ausgebildet und ein mit dem Ventilsitz zusammenwirkender Ventilkörper bewegbar angeordnet, der der Wirkung von Federmitteln und einem Flüssigkeitsdruck ausgesetzt ist, wobei die Federmittel dem Flüssigkeitsdruck entgegenwirken, um den Ventilkörper von dem Ventilsitz abzuheben.

Die Erfindung betrifft ferner eine druckmittelbetätigbare Reibscheibenkupplung mit einem erfindungsgemäßen Ventil.

Bei landwirtschaftlichen und industriellen Fahrzeugen wie Ackerschleppern und dergleichen, finden für die Zuschaltung des Vorderradantriebs federbelastete druckmittelbetätigte Reibscheibenkupplungen Anwendung. Um eine gleichmäßige Schmierung der einzelnen Reibscheiben insbesondere bei geschlossener Kupplung zu ermöglichen, enthalten diese Kupplungen Ventile. Die Ventile dichten den Innenraum der Kupplung ab, solange ein Kupplungsdruck ansteht, durch den die Kupplungsscheiben voneinander getrennt werden. Im drucklosen Zustand öffnen die Ventile den Innenraum zur Umgebung, um einen Schmiermitteldurchfluß zu gewährleisten und eine ausreichende Kühlung der Kupplungsscheiben zu ermöglichen.

Die DE-A-41 19 874 zeigt eine druckmittelbetätigte Reibscheibenkupplung, die durch Federkraft geschlossen und durch Druckmitteldruck geöffnet wird. Der die Kupplungsscheiben aufnehmende Raum ist als im wesentlichen abgedichtete Kammer ausgebildet, die zum Lösen der Kupplung mit einer Druckquelle in Verbindung steht. Im äußeren Umfangsbereich der rotierenden Kupplungstrommel ist ein Ventil angeordnet, das geschlossen ist, wenn bei offener Kupplung die Kammer unter Druck steht, und das bei geschlossener Kupplung die drucklose Kammer mit einem Vorratsbehälter verbindet, um einen Schmiermitteldurchfluß und eine Kühlung der Kupplungsscheiben zu gewährleisten. Das Ventil enthält ein in einem radial ausgerichteten Ventilkanal verschiebbares Ventilteil. Das Ventilteil ist einerseits dem Kammerdruck ausgesetzt, welcher es radial nach außen drängt, um einen mit der Kammer verbundenen Querkanal zu verschließen, und andererseits durch die Kraft einer Feder belastet, die das Ventilteil radial nach innen drückt, um den Querkanal zu einem Vorratsbehälter zu öffnen. Durch die radiale Ausrichtung des Ventilkanals ist der Ventilkörper dem Einfluß von Zentrifugalkräften ausgesetzt, so daß die Schließbedingungen von der Drehzahl der Kupplungstrommel abhängt, was unerwünscht sein kann.

Die EP-B-0 057 599 zeigt einen anderen Kupplungstyp, bei dem ein sich drehendes Gehäuse ein Kupplungsscheibenpaket und einen Kolben aufnimmt. Durch Erhöhung des Drucks in einer Kolbenkammer wird der Kolben verschoben und drückt das Kupplungsscheibenpaket zusammen. In dem Gehäuse befindet sich ein axial ausgerichtetes Druckentlastungsventil der eingangs genannten Art, das die Kolbenkammer mit einem äußeren Sammelbehälter verbindet. Das Druckentlastungsventil ist ein Kugelsitzventil, bei dem ein in einem Führungsdurchgang, der sich parallel zur Drehachse durch eine Wandung des Gehäuses erstreckt, ausgebildeter konischer Ventilsitz mit einer Kugel zusammenwirkt. Die Kugel wird einerseits durch die Kraft einer Feder und andererseits durch einen in der Kolbenkammer herrschenden Druck auf den Ventilsitz gedrückt, um das Druckentlastungsventil zu schließen. Der Durchmesser des Führungsdurchgangs ist größer als der der Kugel, so daß bei sich drehendem Gehäuse die Kugel infolge von Fliehkräften radial nach außen ausweichen und sich von dem Ventilsitz abheben kann. Die Federkraft und die Neigung des Ventilsitzkonus sind aufeinander abgestimmt. Wenn bei Drehzahlen, die einen vorgebbaren Wert überschreiten, infolge eines Auskuppelvorgangs der Druck in der Kolbenkammer abnimmt, öffnet das Druckentlastungsventil aufgrund von Fliehkräften, welche die Kugel radial nach außen drängen und von dem Ventilsitz abheben. Damit soll beim Öffnen der Kupplung unter hohen Drehzahlen eine rasche Entlastung der Kupplungsscheiben ermöglicht werden. Dieses Druckentlastungsventil ist jedoch dort nicht einsetzbar, wo unabhängig von der Fliehkraft eine Durchflußsteuerung erfolgen soll. Ferner können bei Verwendung von Stahlkugeln die durch die Rotation hervorgerufenen Massenkräfte der Kugel derart hoch sein, daß die Kugel beim Zuschalten des Drucks in der Kolbenkammer nicht mehr infolge der Strömungskräfte auf den Ventilsitz zurückkehren kann und somit das Ventil nicht schließt.

In der JP 406 4720 wird eine Reibscheibenkupplung gezeigt. Um die Kupplung zu schließen wird ein Druckzylinder von einer Druckkammer aus, die auf seiner dem Kupplungsinneren abgewandten Seite angeordnet ist, mit Druck beaufschlagt. In dem Druckzylinder ist ein Ventil angeordnet, bei dem ein Ventilkörper durch die Wirkung einer Blattfeder gegen einen Ventilsitz gedrückt wird, solange sich der Druckzylinder bei geöffneter Kupplung in seiner Ausgangsstellung befindet. Die Blattfeder stützt sich hierbei an einer Wandung des Kupplungsgehäuses ab. Wird der Druckzylinder mit Druck beaufschlagt, wird er von der Wandung weg in Richtung eines Lamellenpakets verschoben. Der Ventilkörper wird nun nicht mehr von der Blattfeder belastet, aber durch die Wirkung des Druckes in dem Ventilsitz gehalten. Fällt der Druck in der Druckkammer ab, so wird der Ventilkörper durch die Wirkung einer zweiten Feder, die der Wirkung der Blattfeder und dem Flüssigkeitsdruck entgegenwirkt, von dem Ventilsitz abgehoben. Das Ventil öffnet und ermöglicht einen Flüssigkeitsabfluß aus dem Inneren der Kupplung.

Die EP-A1-0 190 822 zeigt ein Drucksteuerventil für eine Kupplungsvorrichtung, die zwei Durchflußwerte zur Steuerung der Bewegung eines Kupplungskolbens aufweist. Das Ventil beinhaltet eine federbelastete Ventilkapsel, die verschiebbar in einer Bohrung mit abgesetztem Durchmesser zwischen einem Zufuhr- und einem Steuerungsabschnitt angeordnet ist. Sobald der Flüssigkeitsdruck in dem Zufuhrabschnitt den Flüssigkeitsdruck in dem Steuerungsabschnitt um einem vorbestimmten Wert übersteigt, wird die Kapsel in der Bohrung gegen die Wirkung der Feder bewegt. Die äußere zylindrische Oberfläche der Kapsel und der Bohrungsabschnitt mit dem größten Durchmesser wirken zusammen und bilden eine Öffnung, die einen großen Durchflußwert erlaubt und zu einer schnellen Befüllung des Kupplungskolbens führt. Der Druck im Kolben, der in dem Steuerungsabschnitt ansteht, und die Wirkung der Feder bewegen die Kapsel in den Bohrungsabschnitt mit dem nächstgrößeren Durchmesser und ermöglichen einen reduzierten Durchfluß, während der Kupplungskolben vollständig gefüllt wird.

Die US 3 016 121 zeigt eine hydraulische Reibscheibenkupplung bei der ein Lamellenpaket durch einen federbelasteten Kolben zusammengedrückt wird, um die Kupplung zu schließen. Wird eine an den Kolben angrenzende Zylinderkammer unter Druck gesetzt, verschiebt sich der Kolben und öffnet das Lamellenpaket. In dem Kupplungsgehäuses ist ein Druckventil angeordnet, welches von außen durch den Pumpendruck belastet ist. Das Druckventil wird durch eine Feder gegen einen Sitz gedrückt. Erreicht der Pumpendruck einen vorbestimmten Wert, überwindet er die Kraft der Feder und das Ventil öffnet. Dadurch wird ein Durchfluß von Flüssigkeit von einer Pumpe in das Innere des Kupplungsgehäuses möglich.

Die mit der Erfindung zu lösende Aufgabe wird darin gesehen, ein Durchflußsteuerventil der eingangs genannten Art anzugeben, welches unabhängig von Massenkräften zuverlässig seine Funktion erfüllt, den Beanspruchungen am Dichtsitz auch bei hohen Drücken und Temperaturen standhält, einfach und kostengünstig herstellbar und einfach montierbar ist. Eine weitere Aufgabe ist es eine druckmittelbetätigbare Reibscheibenkupplung mit einem erfindungsgemäßen Ventil mit den genannten Vorteilen anzugeben.

Erfindungsgemäß wird dies bei einem Ventil des oben genannten Typs dadurch erreicht, daß der Ventilkörper eine wenigstens bereichsweise zylindrische Umfangsfläche aufweist, die sich an der Wandung der Durchflußausnehmung radial abstützt, daß der Ventilkörper wenigstens einen sich zwischen dem Ventilsitz und der dem Ventilsitz abgewandten Seite des Ventilkörpers erstreckenden Durchflußkanal aufweist und daß der Ventilkörper durch die durchströmende Flüssigkeit gegen die Kraft der Federmittel in Schließstellung zum Ventilsitz gedrückt wird.

Dadurch wird das Ventil von Massenkräften weitgehend befreit, da sich sein Ventilkörper an der Wandung der Durchflußausnehmung abstützt und so die radialen Zentrifugalkräfte aufgenommen werden. Diese macht sich nur noch in Form von Reibungskräften zwischen Ventilkörper und Wandung bemerkbar. Der Ventilkörper wird unabhängig von der Drehzahl des sich drehenden Bauteils, das im weiteren als Kupplungstrommel einer Kupplung betrachtet wird, durch die Strömungskräfte der das Ventil durchströmenden Flüssigkeit geschlossen und durch die Federkraft des Federmittels geöffnet.

Um die Funktion des Ventils zu gewährleisten, ist es sinnvoll den Ventilkörper innerhalb der Durchflußausnehmung in axialer Richtung parallel zur Drehachse verschiebbar zu führen.

Besonders einfach ist die Herstellung der Durchflußausnehmung wenn diese in Form einer Bohrung ausgeführt wird und das Ventilteil Führungsmittel aufweist, die sich an der zylindrischen Wandung der Bohrung abstützen.

Vorzugsweise ist der Dichtsitz nicht linienförmig sondern als Dichtfläche ausgebildet, wobei die Sitzfläche des Ventilkörpers und der in der Durchflußausnehmung ausgebildete Ventilsitz miteinander korrespondierende Kegelmantelflächen sind. Dadurch wird ein günstiges Dichtverhalten erzielt. Der Ventilsitz läßt sich in der Durchflußausnehmung zwischen zwei miteinander fluchtenden Bohrungsabschnitten unterschiedlichen Querschnitts leicht mit Hilfe eines Senkbohrers ausführen.

Um das Verschieben des Ventilkörpers innerhalb der Bohrung zu begrenzen, wird ein Sicherungs- bzw. Sprengring als Anschlag in die Gleitbahn des Ventilkörpers eingebracht.

Es ist vorteilhaft, den Ventilkörper aus einem Material geringer Dichte vorzugsweise einem Kunststoff herzustellen. Dadurch ist der Ventilkörper nur einem geringen Einfluß der Zentrifugalkraft ausgesetzt. Der Ventilkörper ist als Kunststoff-Formteil sehr einfach und kostengünstig in engen Toleranzen, z.B. als Spritzteil herstellbar. Der Kunststoff gewährleistet einen guten Dichtsitz, da sich der Ventilkörper während des Schließvorgangs an den Ventilsitz plastisch anpassen kann. Eine Verformung ist bei dem vorgeschlagenen Ventilkörper im Gegensatz zu einer Kunststoffkugel unproblematisch, da immer die gleichen Bereiche des Ventilkörpers auf dem Ventilsitz zur Auflage kommen. Bei einer Kugel haben die durch die Verformung entstandenen Kerben bei Lageveränderungen bzw. Verdrehen der Kugel einen negativen Einfluß auf das Dichtverhalten.

Bei der Auswahl des Materials ist es vorteilhaft einen Kunststoff zu wählen, der den gleichen thermischen Ausdehnungskoeffizienten wie die Kupplungstrommel aufweist. Dadurch wird erreicht, daß sich bei betriebsbedingten Temperaturänderungen der Kupplungstrommel die Toleranzen zwischen dem Ventilkörper und der Durchflußausnehmung der Kupplungstrommel nicht ändern.

Bei einer Kupplungsglocke aus Stahl ist eine Ausführung des Ventilkörpers aus Polyarylamid vorteilhaft, da dieser Kunststoff die bisher genannten Eigenschaften aufweist und den einsatzbedingten Festigkeitsanforderungen im Medium Öl entspricht.

Eine Funktion des Ventils besteht darin, bei geschlossener Kupplung den Durchfluß von Schmieröl durch die Kupplungsglockenkammer und durch Kanäle im Lamellenpaket zu ermöglichen. Dazu ist an dem Ventilkörper mindestens ein Durchflußkanal für das Schmieröl vorgesehen, der in die zylindrische Außenfläche des Ventilkörpers eingelassen ist. Um eine Dichtung zu ermöglichen, endet der Durchflußkanal außerhalb der Dichtfläche. Die Umfangsfläche des Ventilkörpers kann dabei aus einzelnen sich in Längsrichtung erstreckenden Stegen, mit denen sich der Ventilkörper an der Wandung der Bohrung abstützt, bestehen.

Möglichst geringe Stauungen des durchströmenden Mediums bei geöffnetem Ventil und damit geringe Strömungsverluste erhält man, wenn die Gesamtquerschnittsfläche der Durchflußkanäle wenigstens so groß ist wie die Querschnittsfläche zwischen Ventilsitz und Ventilkörper bei geöffnetem Ventil.

Weist der Durchflußkanal eine in Strömungsrichtung ansteigende schräge Rampe auf bzw. steigt der Boden des Durchflußkanals in Strömungsrichtung fortlaufend bevorzugt parabelförmig an, so begünstigt das das Strömungsverhalten des durchströmenden Mediums, da die Rampe als Eintrittshilfe dient. Der Eintrittsbereich wird vergrößert, was die teilweise Überdeckung desselben durch den Sprengring ausgleicht.

Um auch die Rückstellfeder des Ventils vom Einfluß der Zentrifugalkraft zu befreien, wird diese einerseits an der dem Ventilsitz zugewandten Seite des Ventilkörpers axial geführt und an ihrem gegenüberliegenden Ende von einem Bereich der Durchflußausnehmung mit geringerem Durchmesser aufgenommen. Dies geschieht besonders vorteilhaft, wenn ein zylindrisches Ende der Feder durch eine konzentrische zylinderförmige Ausnehmung im Ventilkörper geführt wird.

Ein vorteilhafter Einsatzbereich für das erfindungsgemäße Ventil ergibt sich in einer druckmittelbetätigten Reibscheibenkupplung wie sie bereits in Zusammenhang mit der DE-A-41 19 874 definiert wurde. Das Ventil dichtet den Innenraum der Kupplungsglocke ab, wenn dieser unter Druck steht. Im drucklosen Zustand wird jedoch ein Durchfluß von Schmiermittel gewährleistet. Das erfindungsgemäße Ventil ermöglicht dies bei beliebigen Drehzahlen der Kupplungsglocke, indem es im drucklosen Zustand durch Federkraft öffnet und bei Zuschalten des Kupplungsdruckes durch die Strömungskräfte des durchströmenden Mediums schließt.

Das erfindungsgemäße Ventil eignet sich auch als Zuflußventil, das bei geschlossener Kupplung einen Druckmittelstrom von einem Sammelbehälter in den Innenraum ermöglicht. Bei geschlossener Kupplung und damit drucklosem Innenraum entsteht im Innenraum ein kleiner Unterdruck, da das Schmieröl durch die radial außen liegenden erfindungsgemäßen Ventile abgeschleudert werden kann. In diesem Fall öffnen sich die radial innen liegenden Ventile durch Federkraft und ermöglichen einen Schmiermitteldurchfluß, der an den geschlossenen Kupplungslamellen vorbeiströmt und diese kühlt.

Weitere vorteilhafte Ausführungen ergeben sich aus den Unteransprüchen.

Im folgenden wird die Erfindung anhand von Ausführungsbeispielen mit Bezug auf die Zeichnung näher erläutert.

Es zeigt:
- Fig. 1: eine Reibscheibenkupplung im Querschnitt mit erfindungsgemäßen Ventilen,
- Fig. 2: einen vergrößerten Teilbereich der Fig. 1 mit einem erfindungsgemäßen Ventil,
- Fig. 3: den Längsschnitt durch ein weiteres erfindungsgemäßes Ventil in zwei Stellungen, wobei der obere Teil der Darstellung das Ventil in geöffnetem und der untere Teil der Darstellung das Ventil in geschlossenem Zustand darstellt und
- Fig. 4: einen Querschnitt durch das Ventil der Fig. 3 entlang der Linie 4-4.

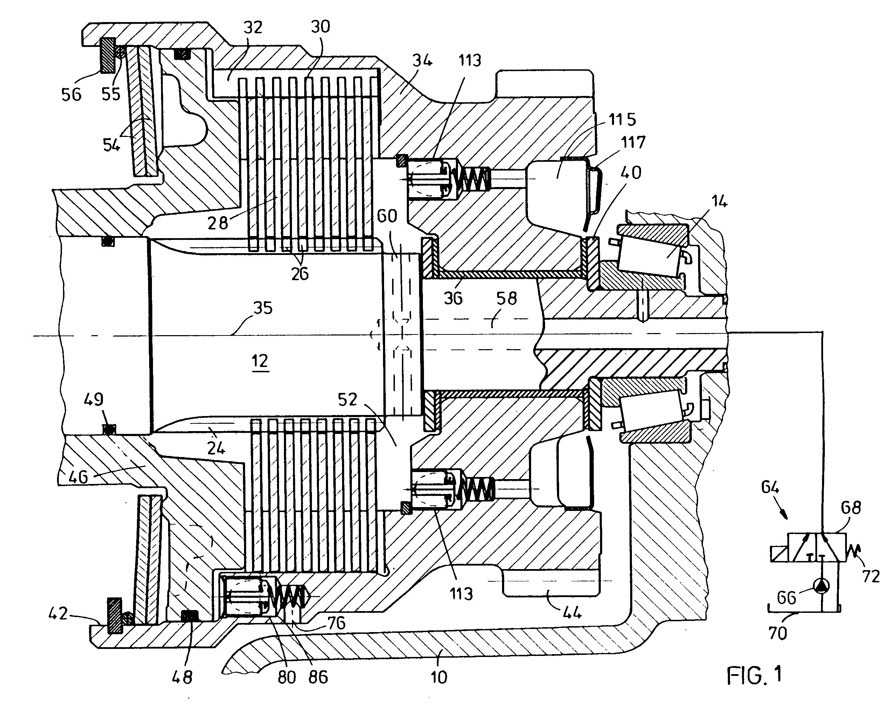

Gemäß Fig. 1 ist in einem Kupplungsgehäuse 10 eine Welle 12 mittels zweier Kegelrollenlager 14, von denen nur eines dargestellt wurde, gelagert. Im Kupplungsgehäuse 10 sammelt sich Druck- bzw. Kühlöl, es dient somit als Sammelbehälter.

In ihrem mittleren Bereich trägt die Welle 12 eine Verzahnung 24, die mit den Innenlamellen 26 eines Lamellenpakets 28 in Eingriff steht. Die Außenlamellen 30 des Lamellenpakets 28 greifen in eine Verzahnung 32 einer Kupplungsglocke 34 ein.

Die Kupplungsglocke 34, die als Gehäuse für das Lamellenpaket 28 dient, ist über eine Gleitlagerbuchse 36 auf der Welle 12 um eine Drehachse 35 drehbar gelagert und durch Anlaufscheiben 40, von denen nur die rechte dargestellt wurde, zur Aufnahme axialer Kräfte gesichert. An der Kupplungsglocke 34 ist ein Antriebszahnrad 44 angeformt, welches mit einem Ausgangszahnrad eines nicht dargestellten Fahrzeuggetriebes in Eingriff steht.

In einer zylinderförmigen Ausnehmung 42 der Kupplungsglocke 34 ist ein Kolben 46 axial verschiebbar angeordnet. Der Kolben 46 ist durch einen O-Ring 48 gegenüber der Kupplungsglocke 34 und einen Dichtungsring 49 gegenüber der Welle 12 abgedichtet.

Der Dichtungsring 49 ist für rotierende und translatorische Relativbewegungen geeignet und beispielsweise ein sogenannter "Kolbenring" aus Teflon.

Die Kupplungsglocke 34, die Welle 12 und der Kolben 46 schließen eine im wesentlichen abgedichtete Kammer 52 ein, in der sich das Lamellenpaket 28 befindet. Das Lamellenpaket 28 liegt mit seiner einen Seite an einem ringförmigen Vorsprung der Kupplungsglocke 34 und mit seiner anderen Seite an einem ringförmigen Vorsprung des Kolbens 46 an. Gesonderte Druckplatten sind nicht vorgesehen.

Der außerhalb des Kolbens 46 liegende Bereich der Ausnehmung 42 der Kupplungsglocke 34 nimmt zwei Tellerfedern 54 auf, deren äußerer Rand sich an einem mit der Kupplungsglocke 34 in Eingriff stehenden Sicherungsring 56 und einem Ring 55 abstützt und deren axial innerer Bereich gegen die Außenfläche des Kolbens 46 vorgespannt ist, so daß der Kolben 46 zum Lamellenpaket 28 verschoben wird und dieses zusammendrückt. Mit zusammengedrücktem Lamellenpaket 28 ist die Kupplung eingerückt und überträgt Drehmomente von dem Antriebszahnrad 44 über die Kupplungsglocke 34 auf die Welle 12. Die Vorspannung der Tellerfedern 54 ist so gewählt, daß ein vorgebbares Drehmoment übertragen wird, ohne daß die Lamellen 26, 30 unter üblichen Betriebslasten gegeneinander schleifen.

Die Welle 12 weist eine axiale Bohrung 58 sowie radial verlaufende Zulaufbohrungen 60 auf. Die Zulaufbohrungen 60, von denen lediglich zwei dargestellt sind, verbinden die axiale Bohrung 58 mit der Kammer 52. Die axiale Bohrung 58 steht mit einem Hydraulikversorgungssystem 64 in Verbindung. Letzteres besteht im wesentlichen aus einer Hydraulikpumpe 66, einem Drucksteuerventil 68 und einem Sammelbehälter 70. Die Pumpe 66 liefert den Systemdruck von beispielsweise 12 bar. Das Drucksteuerventil 68 ist ein elektromagnetisches 3/2-Ventil mit drei Wegen und zwei Stellungen, welches durch ein elektrisches Steuersignal gegen die Kraft einer Feder 72 aus seiner dargestellten ersten Stellung verschiebbar ist.

In einer ersten, dargestellten Stellung des Drucksteuerventils 68 wird die Kammer 52 mit dem Sammelbehälter 70 verbunden, so daß die Kammer 52 druckentlastet wird und die Kupplung eingeschaltet ist.

In einer zweiten Stellung verbindet das Drucksteuerventil 68 den Ausgang der Hydraulikpumpe 70 mit der Kammer 52. Der Druck in der Kammer 52 steigt auf den Systemdruck an und führt dazu, daß sich der Kolben 46 gegen die Kraft der Tellerfeder 54 nach außen bewegt, so daß sich die einzelnen Lamellen 26, 30 voneinander lösen und sich gegeneinander verdrehen lassen. Die Kupplung wird somit in dieser zweiten Ventilstellung ausgerückt und überträgt kein Drehmoment.

In der Kupplungsglocke 34 verläuft ein radialer zur Umfangsfläche der Kupplungsglocke 34 offener Kanal 76, der mit einer im wesentlichen parallel zur Wellenachse 35 angeordneten sich zur Kammer 52 öffnenden Durchflußausnehmung 80 verbunden ist. In dieser Durchflußausnehmung 80 ist ein Ventilkörper 82 angeordnet, der mit einer Rückstellfeder 84 belastet ist. Durch die Rückstellfeder 84 wird ein weiter unten näher beschriebenes Ventil 86 geöffnet, solange die Kammer 52 drucklos und die Kupplung eingerückt ist. Dies ermöglicht einen Durchfluß von Schmiermittel.

Damit wird bei eingerückter Kupplung ein Kühlflüssigkeitsstrom aufrechterhalten, der die Kupplungslamellen 26, 30 vor Überhitzung für den Fall schützt, daß die Kupplungslamellen 26, 30 infolge Überlast gegeneinander rutschen.

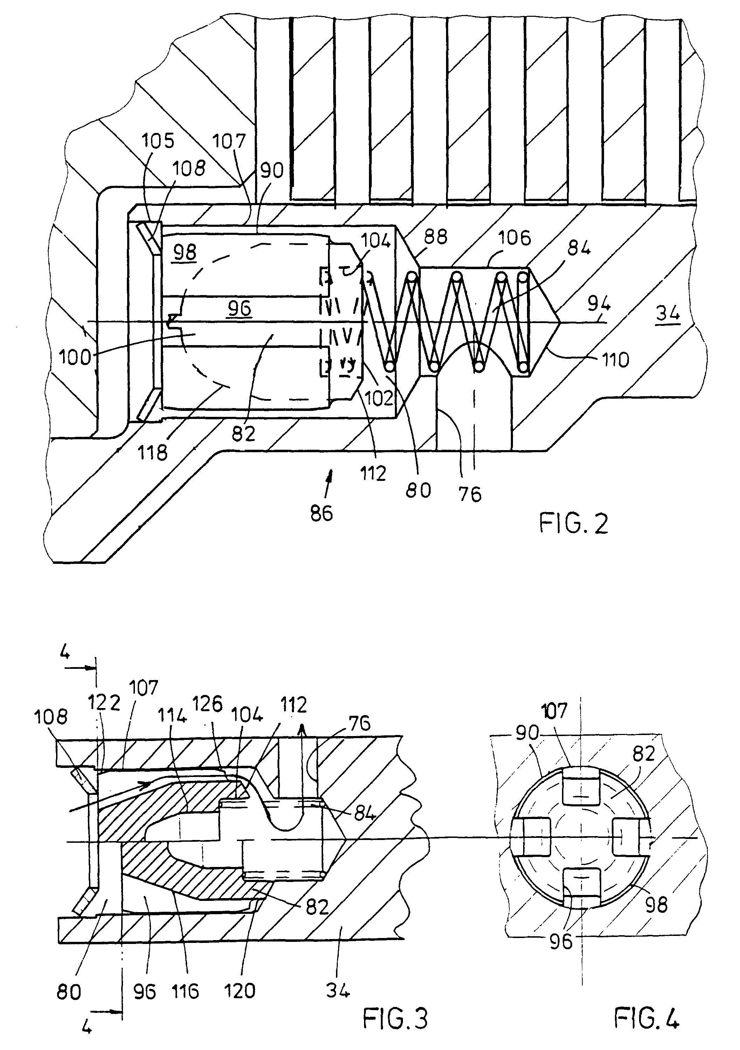

Zum Auskuppeln wird die Magnetspule des Durchflußventils 68 erregt, so daß dieses in seine zweite Stellung übergeht und den Systemdruck der Hydraulikpumpe 70 an die Kammer 52 anlegt. Gleichzeitig wird durch den Druck der Ventilkörper 82 gegen die Kraft der Rückstellfeder 84 axial nach rechts (Fig. 2) verschoben und verschließt die Verbindung zum Kanal 76, so daß ein Druckabbau in der Kammer 52 vermieden wird. Bei geöffneter Kupplung erfolgt kein Kühlmitteldurchfluß, da eine Kühlung des Lamellenpakets 34 hierbei nicht erforderlich ist.

Soll die Kupplung wieder eingerückt werden, so wird der Stromzufluß zur Magnetspule des Drucksteuerventils 68 unterbrochen , so daß das Drucksteuerventil 68 wieder in seine erste Stellung zurückkehrt. Hierdurch wird die Kammer 52 mit dem Sammelbehälter 70 verbunden und druckentlastet. Damit nimmt auch der unter dem Einfluß der Feder 84 stehende Ventilkörper 82 seine ursprünglich dargestellte Lage ein und öffnet die Verbindung zum Kanal 76.

Fig. 2 zeigt eine bevorzugte Ausführungsvariante des bereits angesprochenen Ventils 86, welches bei druckloser, geschlossener Kupplung einen das Lamellenpaket 28 kühlenden Schmiermitteldurchfluß ermöglicht. Das Ventil 86 enthält einen Ventilkörper 82, der in einer außerhalb der Drehachse 35 der Kupplungsglocke 34 liegenden, sich parallel zur Drehachse 35 erstreckenden, zylindrischen Durchflußausnehmung 80 axial verschiebbar angeordnet ist. Der Ventilkörper 82 wirkt mit einem Ventilsitz 88 der Durchflußausnehmung 80 zusammen und wird durch eine Rückstellfeder 84 von dem Ventilsitz 88 weggedrückt.

Die Durchflußausnehmung 80 ist eine zur Kammer 52 offene Stufenbohrung mit drei zylindrischen Abschnitten 105, 106, 107. Der den kleinsten Durchmesser aufweisende am tiefsten in die Kupplungsglocke 34 eindringende Abschnitt 106 steht über den radialen Abflußkanal 76 mit dem Äußeren der Kupplungsglocke 34 und damit mit dem als Sammelbehälter dienenden Kupplungsgehäuse 10 in Verbindung. Dieser Abschnitt 106 nimmt ein Ende einer schraubenförmigen Rückstellfeder 84 auf, die sich axial an dem Auslauf der Stufenbohrung und radial an den Seitenwandungen des Abschnitts 106 abstützt. Von dem mittleren Abschnitt 107 der Stufenbohrung, der einen mittleren Durchmesser aufweist, wird der axial verschiebbare Ventilkörper 82 aufgenommen. In den Ventilkörper 82 ist stirnseitig eine wenigstens bereichsweise zylindrische Aufnahmebohrung 104 eingelassen, die das andere Ende der Rückstellfeder 84 aufnimmt und dieses radial und axial abstützt. In dem äußeren Abschnitt 105 der Stufenbohrung stützt sich ein Sicherungsring 108 ortsfest ab. Der Sicherungsring 108 begrenzt die axiale Verschiebung des Ventilkörpers 82.

Zwischen dem am tiefsten liegenden Abschnitt 106 und dem mittleren Abschnitt 107 der Stufenbohrung ist eine konische Fläche ausgebildet, die mit Hilfe eines Senkbohrers einfach herstellbar ist. Diese konische Fläche bildet den Ventilsitz 88 auf dem in geschlossenem Zustand des Ventils 86 eine entsprechend ausgebildete konische Dichtfläche 112 des Ventilkörpers 82 aufliegt.

Die Außenkontur 90 des Ventilkörpers 82 ist im wesentlichen zylinderförmig. Der dem Ventilsitz 86 zugewandte Bereich ist abgesetzt und hat einen etwas geringeren Durchmesser als die übrige Außenkontur 90. Zur Stirnseite hin ist eine kegelförmige Dichtfläche 112 ausgebildet, die mit der konischen Fläche des Ventilsitzes 88 korrespondiert. Zwischen der Dichtfläche 112 und der dem Ventilsitz 88 abgewandten Stirnfläche sind in die zylindrische Außenkontur 90 des Ventilkörpers 82 mehrere sich axial erstreckende Durchflußkanäle 96 eingelassen. Die Durchflußkanäle 96 münden radial außerhalb der Dichtfläche 112 und erlauben nur bei offenem Ventil einen Schmiermitteldurchfluß. Zwischen jeweils benachbarten Durchflußkanälen 96 liegen Stege 98. Über die zylindrische Außenkontur 90 der Stege 98 wird der Ventilkörper 82 in den mittleren Abschnitt 107 der Stufenbohrung geführt und radial abgestützt.

Der Ventilkörper 82 besteht aus einem Kunststoff geringen Gewichts, der vorzugsweise den gleichen Temperaturausdehnungskoeffizienten wie das Material der Kupplungsglocke 34 (beispielsweise Stahl) besitzt. Als Material für den Ventilkörper 82 kann Polyarylamid verwendet werden. Dieses Material besitzt einerseits in etwa den gleichen Temperaturausdehnungskoeffizienten wie Stahl. Andererseits erfüllt es die verlangten Festigkeitsanforderungen, ist temperaturbeständig in Schmieröl und läßt sich kostengünstig spritztechnisch herstellen.

Die Wirkungsweise des Ventils 86 ist folgende:

Herrscht in der Kammer 52 lediglich ein geringer Druck, so wird der Ventilkörper 82 durch die Kraft der Rückstellfeder 84 hinsichtlich Fig. 2 nach links verschoben bis er an dem Sicherungsring 108 anliegt. In dieser Stellung kann Schmiermittel aus der Kammer 52 durch die Durchflußkanäle 96, den Zwischenraum zwischen dem Ventilsitz 88 und der Dichtfläche 112 des Ventilkörpers 82 und über den Abflußkanal 76 in den Sammelbehälter abfließen. Mit steigendem Druck in der Kammer 52 erhöht sich einerseits die Druckkraft auf die dem Sicherungsring 108 zugewandte Stirnseite des Ventilkörpers 82 und andererseits die Strömungsgeschwindigkeit durch das Ventil 86. Eine zunehmende Strömungsgeschwindigkeit führt zu einer Erhöhung der Reibungskraft an den Seitenflächen der Durchflußkanäle 96 des Ventilkörpers 82. Zunehmende Druckkraft und Reibungskraft führen schließlich dazu, daß sich der Ventilkörper 82 gegen die Kraft der Rückstellfeder 84 axial verschiebt, bis sich die Dichtfläche 112 auf den Ventilsitz 88 preßt, so daß das Ventil schließt und der Kühlmittelabfluß unterbrochen wird. Nun kann sich der Druck in der Kammer 52 ungehindert weiter aufbauen, wobei sich der Kolben 46 verschiebt und die Lamellen 26, 30 sich voneinander lösen.

In Fig. 1 sind zwei weitere Zuflußventile 113 dargestellt, die in radial weiter innen liegenden Ausnehmungen der Kupplungsglocke 34 angeordnet sind und den Durchfluß zwischen dem Sammelbehälter und der Kammer 52 steuern. Die Zuflußventile 113 weisen den gleichen Aufbau auf, wie das im äußeren Bereich der Kupplungsglocke 34 dargestellte Ventil 86, das in der Fig. 2 näher dargestellt ist. Bei geschlossener Kupplung und damit drucklosem Innenraum 52 entsteht in diesem ein kleiner Unterdruck, da das Schmier- und Kühlmittel durch die radial außen liegenden erfindungsgemäßen Ventile 86 abgeschleudert werden kann. Die radial innen liegenden erfindungsgemäßen Zuflußventile 113 öffnen sich dann durch die Kraft ihrer Rückstellfedern 84 und ermöglichen einen Schmiermitteldurchfluß, der an den geschlossenen Kupplungslamellen 26, 30 vorbeiströmt und diese kühlt.

In der Kupplungsglocke 34 ist ein den Zuflußventilen 113 axial vorgelagerter Ringraum 115 ausgebildet, in dem ein Schaufelrad 117 angeordnet ist. Durch das Schaufelrad 117 wird Schmier- und Kühlmittel aus dem als Sammelbehälter ausgebildeten Kupplungsgehäuse 10 in den Ringraum 115 gefördert und von dort durch den Unterdruck in der Kammer 52 angesaugt. Damit wird das Schmier- und Kühlmittel nicht über das Magnetventil 68 geführt, sondern über das Schaufelrad 117 und die Zuflußventile 113. Ein Innendruck von 1 bis 2 bar kann die Zuflußventile 113 schließen, und die Schmier- und Kühlmittelzirkulation über das Schaufelrad 117, die inneren Zuflußventile 113 und das äußere Ventil 86 unterbrechen.

Aus Fig. 3 und 4 geht eine weitere bevorzugte Ausführungsvariante für den Ventilkörper 82 hervor. Es werden im folgenden für gleiche oder sich entsprechende Details dieselben Bezugsziffern verwendet wie in der Fig. 2.

In Fig. 3 ist der Ventilkörper 82 in zwei Stellungen dargestellt. Der oberhalb der Mittellinie gezeigte Ventilkörper 82 befindet sich in seiner offenen Stellung, während der unterhalb der Mittellinie gezeigte Ventilkörper 82 die Schließstellung einnimmt. Der Schmiermitteldurchfluß wurde im oberen Teil der Fig. 3 durch einen Pfeil angedeutet.

Die Außenkontur 90 des in den Fig. 3 und 4 dargestellten Ventilkörpers 82 ist im wesentlichen zylinderförmig. Die dem Ventilsitz 88 zugewandte Stirnseite des Ventilkörpers 82 enthält eine konische Dichtfläche 112. In diese Stirnseite ist eine axiale zylindrische Aufnahmebohrung 104 zur Aufnahme eines Endes der Rückstellfeder 84 eingelassen. An die Aufnahmebohrung 104 schließt sich ein weiterer Bohrungsabschnitt 114 geringeren Durchmessers an, der so ausgebildet ist, daß die Wandstärke des Ventilkörpers 84 über seine axiale Erstreckung in etwa konstant ist. Außerdem wird die Herstellung im Spritzgußverfahren erleichtert.

In die Außenkontur 90 des Ventilkörpers 82 sind vier symmetrisch angeordnete sich axial erstreckende Durchflußkanäle 96 eingelassen, zwischen denen Stege 98 ausgebildet sind, mit deren zylindrischen Außenflächen sich das Ventilteil 82 in der Durchflußausnehmung 80 abstützt. Es sollten möglichst wenige Durchflußkanäle 96 mit großen Querschnitten ausgebildet werden, um eine ausreichende Durchströmmenge zu gewährleisten und die Reibungsverluste der Strömung klein zu halten.

Die radiale Tiefe der Durchflußkanäle 96 ist in der linken (bezüglich Fig. 3) Hälfte des Ventilkörpers 82 in axialer Richtung nicht konstant, sondern nimmt von der Seite des Sicherungsringes 108 zur Seite des Ventilsitzes 88 ab. Die Grundfläche der Durchflußkanäle 96 bilden daher eine schräge Rampe 116. Hierdurch wird der Strömungsmitteleintritt in die Durchflußkanäle 96 erleichtert, der ansonsten durch den Sicherungsring 108 behindert werden könnte. Anstelle der in Fig. 3 dargestellten schrägen Rampe 116 kann die Grundfläche 118 der Durchflußkanäle 96 auch parabelförmig ansteigen, wie dies durch gestrichelte Linien in Fig. 2 angedeutet ist. Durch die Parabelform ergibt sich ein günstiges Strömungsverhalten.

Auf einem kleinen Abschnitt auf der dem Ventilsitz 88 zugewandten Seite des Ventilkörpers 82 ist dessen Außendurchmesser vermindert, so daß hier die Außenkontur mit den Grundflächen der Durchflußkanäle 96 zusammenfällt. Auch diese Maßnahme erleichtert den Durchfluß bei offenem Drucksteuerventil 68.

Zu ihren axialen Endbereichen 122, 126 verjüngen sich die Stege 98 konisch, was das Einsetzen des Ventilkörpers 82 in die Durchflußausnehmung 80 erleichtert.

## Patentansprüche

1. Ventil zur Durchflußsteuerung von Flüssigkeiten mit einer Durchflußausnehmung (80), die in einem sich drehenden Bauteil (34) außerhalb der Drehachse (35) ausgebildet ist und sich parallel zur Drehachse (35) erstreckt, wobei in der Durchflußausnehmung (80) ein Ventilsitz (88) ausgebildet ist, und mit einem in der Durchflußausnehmung (80) bewegbar angeordneten mit dem Ventilsitz (88) zusammenwirkenden Ventilkörper (82), der der Wirkung von Federmitteln (84) und einem Flüssigkeitsdruck ausgesetzt ist, wobei die Federmittel (84) dem Flüssigkeitsdruck entgegenwirken, um den Ventilkörper (82) von dem Ventilsitz (88) abzuheben, **dadurch gekennzeichnet, daß** der Ventilkörper (82) eine wenigstens bereichsweise zylindrische Umfangsfläche aufweist, die sich an der Wandung der Durchflußausnehmung (80) radial abstützt, daß der Ventilkörper (82) wenigstens einen sich zwischen dem Ventilsitz (88) und der dem Ventilsitz (88) abgewandten Seite des Ventilkörpers (82) erstreckenden Durchflußkanal (96) aufweist und daß der Ventilkörper (82) durch die durchströmende Flüssigkeit gegen die Kraft der Federmittel (84) in Schließstellung zum Ventilsitz (88) gedrückt wird.

2. Ventil nach Anspruch 1, **dadurch gekennzeichnet, daß** der Ventilkörper (82) in der Durchflußausnehmung (80) in axialer Richtung parallel zur Drehachse (35) verschiebbar geführt ist.

3. Ventil nach Anspruch 1 oder 2, **dadurch gekennzeichnet, daß** die Gesamtquerschnittsfläche der Durchflußkanäle (96) wenigstens so groß ist wie die Durchtrittsfläche zwischen Ventilsitz (88) und Ventilkörper (82) bei geöffnetem Ventil (86).

4. Ventil nach einem der Ansprüche 1 bis 3, **dadurch gekennzeichnet, daß** die Durchflußausnehmung (80) einen wenigstens bereichsweise zylindrischen, parallel zur Drehachse (35) ausgerichteten Abschnitt (107) aufweist, in dem der Ventilkörper (82) axial geführt ist.

5. Ventil nach Anspruch 4, **dadurch gekennzeichnet, daß** der zylindrische Abschnitt (107) der Durchflußausnehmung (80) auf seiner stromabwärts liegenden Seite in einen zylindrischen Abschnitt (106) geringeren Durchmessers übergeht, daß zwischen den beiden miteinander fluchtenden zylindrischen Abschnitten (106, 107) ein kegelförmiger Ventilsitz (88) ausgebildet ist und daß der Ventilkörper (82) eine entsprechende kegelförmige Dichtfläche (112) aufweist.

6. Ventil nach einem der Ansprüche 1 bis 5, **dadurch gekennzeichnet, daß** in der Durchflußausnehmung (80) ein Sicherungselement (108) befestigbar ist, das in die Gleitbahn des Ventilkörpers (82) eingreift und dessen axiale Verschiebung gegen die Strömungsrichtung begrenzt.

7. Ventil nach einem der Ansprüche 1 bis 6, **dadurch gekennzeichnet, daß** der Ventilkörper (82) auf seiner stromabwärts liegenden Seite eine wenigstens bereichsweise zylindrisch ausgebildete Ausnehmung (104) aufweist, in die eine schraubenförmige Rückstellfeder (84) eingreift, die sich andernends in der Durchflußausnehmung (80) abstützt.

8. Ventil nach einem der Ansprüche 1 bis 7, **dadurch gekennzeichnet, daß** der Ventilkörper (82) aus einem Kunststoff, besteht.

9. Ventil nach Anspruch 8, **dadurch gekennzeichnet, daß** der Kunststoff in etwa den gleichen thermischen Ausdehungskoeffizienten aufweist wie das drehende Bauteil (34).

10. Ventil nach einem oder mehreren der Ansprüche 1 bis 9, **dadurch gekennzeichnet, daß** der Ventilkörper (82) eine kegelförmigen Dichtfläche (112) an einem seiner stirnseitigen Enden, mit wenigstens einem die beiden Stirnseiten verbindenden und radial außerhalb der Dichtfläche (112) endenden Durchflußkanal (96) mit einer in Strömungsrichtung ansteigenden schrägen Rampe (116) aufweist.

11. Ventil nach Anspruch 10, **dadurch gekennzeichnet, daß** als Durchflußkanal (96) wenigstens ein in die zylindrische Außenfläche eingelassener radial außerhalb der Dichtfläche (112) endender Längskanal vorgesehen ist.

12. Ventil nach Anspruch 10 oder 11, **dadurch gekennzeichnet, daß** in das stirnseitige Ende, an dem sich die Dichtfläche (112) befindet, Mittel (104) zur axialen Führung einer Rückstellfeder (84) vorgesehen sind.

13. Ventil nach Anspruch 12, **dadurch gekennzeichnet, daß** als axiale Führungsmittel in das stirnseitige Ende eine konzentrische zylinderförmige Ausnehmung (104) zur Aufnahme eines zylindrischen Endes einer Rückstellfeder (84) eingelassen ist.

14. Druckmittelbetätigbare Reibscheibenkupplung für Fahrzeuge mit einer Kupplungsglocke (34) und einem axial verschiebbaren, einer Federkraft ausgesetzten Kolben (46), die drehbar auf einer Welle (12) gelagert sind und eine die Kupplungsscheiben (26, 30) aufnehmende abgedichtete, mit einer Druckquelle (66) in Verbindung stehende Kammer (52) einschließen, wobei die Reibscheiben-kupplung durch die Federkraft geschlossen und durch einen Druckmitteldruck geöffnet wird, **gekennzeichnet durch** wenigstens ein Ventil (86) gemäß einem der Ansprüche 1 bis 13, über das die Kammer (52) mit einem Sammelbehälter in Verbindung steht.

15. Reibscheibenkupplung nach Anspruch 14, **dadurch gekennzeichnet, daß** wenigstens ein nach den Ansprüchen 1 bis 13 ausgebildetes Ventil (86) im radial äußeren Umfangsbereich der Kupplung angeordnet und derart ausgelegt ist, daß es bei druckloser Kammer (52) öffnet und einen Durchfluß aus der Kammer (52) in einen Sammelbehälter ermöglicht.

16. Reibscheibenkupplung nach Anspruch 14 oder 15, **dadurch gekennzeichnet, daß** wenigstens ein nach den Ansprüchen 1 bis 13 ausgebildetes Ventil (113) im radial inneren Bereich der Kupplung angeordnet ist und als Zuflußventil dient, das bei geschlossener Kupplung einen Schmiermittelzufluß von einem Sammelbehälter zu der Kammer (52) ermöglicht.

17. Reibscheibenkupplung nach einem der Ansprüche 14 bis 16 **dadurch gekennzeichnet**, das wenigstens eine Ventil (86, 113) in der rotierenden Kupplungsglocke (34) angeordnet ist.

## Claims

1. A valve for flow control of fluids, with a flow recess (80) which is formed in a rotating component (34) outside the axis of rotation (35) and extends parallel to the axis of rotation (35), wherein a valve seat (88) is formed in the flow recess (80), and with a valve body (82) which is arranged movably in the flow recess (80) and cooperates with the valve seat (88) and which is subjected to the action of spring means (84) and a fluid pressure, wherein the spring means act against the fluid pressure to lift the valve body (82) from the valve seat (88), **characterized in that** the valve body (82) has an at least locally cylindrical peripheral surface which is supported radially on the wall of the flow recess (80), **in that** the valve body (82) has at least one through-flow channel (96) extending between the valve seat (88) and the side of the valve body (82) facing away from the valve seat (88), and **in that** the valve body (82) is blased by the fluid flowing through on to the valve seat (88) into the closed position, against the force of the spring means (84).

2. A valve according to claim 1, **characterized in that** the valve body (82) is guided slidably in the axial direction in the flow recess (80), parallel to the axis of rotation (35).

3. A valve according to claim 1 or 2, **characterized in that** the total cross-sectional area of the through-flow channel (96) is at least as great as the through-flow area between the valve seat (88) and the valve body (82) with the valve (86) open.

4. A valve according to any of claims 1 to 3, **characterized in that** the flow recess (80) has an at least locally cylindrical section (107) aligned parallel to the axis of rotation (35), in which section the valve body (82) is guided axially.

5. A valve according to claim 4, **characterized in that** the cylindrical section (107) of the flow recess (80) passes into a cylindrical section (106) of smaller diameter on its downstream side, **in that** a conical valve seat (88) is formed between the two aligned cylindrical sections (106, 107) and **in that** the valve body (82) has a correspondingly conical sealing surface (112).

6. A valve according to any of claims 1 to 5, **characterized in that** a retaining element (108) can be fixed in the flow recess (80), engaging in the sliding path of the valve body (82) to limit its axial displacement against the flow direction.

7. A valve according to any of claims 1 to 6, **characterized in that** the valve body (82) has an at least locally cylindrically shaped recess (104) on its downstream side, in which there engages a helical restoring spring (84) which abuts at its other end in the flow recess (80).

8. A valve according to any of claims 1 to 7, **characterized in that** the valve body (82) consists of a plastics material.

9. A valve according to claim 8, **characterized in that** the plastics material has approximately the same coefficient of thermal expansion as the rotating component (34).

10. A valve according to one or more of claims 1 to 9, **characterized in that** the valve body (82) has a conical sealing surface (112) on one of its ends, with at least one through-flow channel (96) connecting the two ends and terminating outside the sealing surface (112), with an inclined ramp (116) rising in the flow direction.

11. A valve according to claim 10, **characterized in that** at least one longitudinal channel let into the cylindrical outer surface and terminating radially outside the sealing surface (112) is provided as the through-flow channel (96).

12. A valve according to claim 10 or 11, **characterized in that** means (104) for axial guiding of a restoring spring (84) are provided in the face end where the sealing surface (112) is located.

13. A valve according to claim 12, **characterized in that** a concentric, cylindrically shaped recess (104) is let into the face end as axial guiding means, for reception of a cylindrical end of a restoring spring (84).

14. A friction disc clutch for vehicles, which is operated by a pressure medium and has a clutch drum (34) and an axially movable piston (46) subjected to spring bias, which are mounted rotatably on a shaft (12) and enclose a sealed chamber (52) receiving the clutch discs (26, 30) and in communication with a pressure source, wherein the friction clutch is engaged by the spring bias and is opened by the pressure of a pressure medium, **characterised by** at least one valve (86) according to any of claims 1 to 13, through which the chamber (52) is connected to a reservoir.

15. A friction clutch according to claim 14, **characterized in that** at least one valve (86) formed in accordance with claims 1 to 13 is arranged in the radially outer peripheral region of the clutch and is so arranged that it opens with the chamber (52) free from pressure and enables flow out of the chamber (52) into a reservoir.

16. A friction clutch according to claim 14 or 15, **characterized in that** at least one valve (113) formed in accordance with claims 1 to 13 is arranged in the radially inner region of the clutch and serves as a feed valve which enables flow of lubricant from a reservoir to the chamber (52) with the clutch engaged.

17. A friction clutch according to any of claims 14 to 16, **characterized in that** at least one valve (86, 113) is arranged in the rotating clutch drum (34).

## Revendications

1. Soupape pour la commande de passage de liquides comportant une ouverture de passage (80), qui est formée dans un composant rotatif (34) en dehors de l'axe de rotation (35) et qui s'étend parallèlement à l'axe de rotation (35), un siège de soupape (88) étant formé dans l'ouverture de passage (80), et comportant un corps de soupape (82), qui est disposé de manière à être déplaçable dans l'ouverture de passage (80) et coopère avec le siège de soupape (88) et qui est soumis à l'action de moyens formant ressort (84) et d'une pression de liquide, les moyens formant ressort (84) agissant en sens opposé de la pression du liquide de manière à écarter le corps de soupape (82) du siège de soupape (88), **caractérisée en ce que** le corps de soupape (82) possède une surface circonférentielle cylindrique au moins par endroits, qui prend appui radialement sur la paroi de l'ouverture de passage (80), que le corps de soupape (82) possède au moins un canal de passage 96 qui s'étend entre le siège de soupape (8) et le côté du corps de soupape (82), qui est situé à l'opposé du siège de soupape (88), et que le corps de soupape (82) est repoussé par le liquide circulant, à l'encontre de la force des moyens formant ressort (84) dans la position de fermeture en direction du siège de soupape (88).

2. Soupape selon la revendication 1, **caractérisée en ce que** le corps de soupape (88) est guidé de manière à être déplaçable dans la direction axiale, parallèlement à l'axe de rotation (35), dans l'ouverture de passage (80).

3. Soupape selon la revendication 1 ou 2, **caractérisée en ce que** la surface en coupe transversale totale des canaux de passage (96) est au moins égale à la surface de passage entre le siège de soupape (88) et le corps de soupape (82) lorsque la soupape (86) est ouverte.

4. Soupape selon l'une des revendications 1 à 3, **caractérisée en ce que** l'ouverture de passage (80) possède une partie (107), qui est cylindrique au moins par endroits, et est orientée parallèlement à l'axe de rotation (35) et dans laquelle le corps de soupape (82) est guidé axialement.

5. Soupape selon la revendication 4, **caractérisée en ce que** la partie cylindrique (107) de l'ouverture de passage (80) se prolonge, sur son côté aval, par une partie cylindrique (106) de diamètre réduit, qu'un siège de soupape conique (88) est formé entre les deux parties cylindriques (106,107) alignées l'une sur l'autre et que le corps de soupape (82) comporte une surface d'étanchéité de forme conique correspondante (112).

6. Soupape selon l'une des revendications 1 à 5, **caractérisée** dans l'ouverture de passage (80) peut être fixé un élément de fixation (108), qui s'engage dans la voie de glissement du corps de soupape (82) et dont le décalage axial dans la direction d'écoulement est limité.

7. Soupape selon l'une des revendications 1 à 6, **caractérisée en ce que** le corps de soupape (82) possède, sur son côté aval, un évidement (104) agencé au moins par endroits avec une forme cylindrique et dans lequel s'engage un ressort hélicoïdal de rappel (84), qui prend appui par son autre extrémité dans l'ouverture de passage (80).

8. Soupape selon l'une des revendications 1 à 7, **caractérisée en ce que** le corps de soupape (82) est réalisé en une matière plastique.

9. Soupape selon la revendication 8, **caractérisée en ce que** la matière plastique possède approximativement le même coefficient de dilatation thermique que le composant rotatif (34).

10. Soupape selon une ou plusieurs des revendications 1 à 9, **caractérisée en ce que** le corps de soupape (82) possède une surface d'étanchéité de forme conique (112) située sur l'une de ses extrémités frontales, avec au moins un canal de passage (96) qui relie les deux faces frontales et se termine radialement à l'extérieur de la surface d'étanchéité (112) et possède une rampe oblique (116), qui remonte dans la direction d'écoulement.

11. Soupape selon la revendication 10, **caractérisée en ce qu'**il est prévu comme canal de passage (96) au moins un canal longitudinal qui est aménagé dans la surface extérieure cylindrique et se termine radialement à l'extérieur de la surface d'étanchéité (112).

12. Soupape selon la revendication 10 ou 11, **caractérisée en ce que** des moyens (104) pour guider axialement un ressort de rappel (84) sont prévus dans l'extrémité frontale, sur laquelle est située la surface d'étanchéité (112).

13. Soupape selon la revendication 12, **caractérisée en ce que** comme moyens de guidage axial dans l'extrémité frontale est aménagée un évidement de forme cylindrique (104) servant à loger une extrémité cylindrique du ressort de rappel (84).

14. Embrayage à disques à friction pouvant être actionné par un fluide sous pression pour véhicules comprenant une cloche d'embrayage (34) et un piston (46) déplaçable axialement et soumis à la force d'un ressort, ces deux unités enserrant une chambre (52) étanchéifiée, qui loge les disques d'embrayage (28,30) et est reliée à une source de pression (66), l'embrayage à disques à friction étant fermé par la force du ressort et étant ouvert par une pression du fluide sous pression, **caractérisé par** au moins une soupape (86) selon l'une des revendications 1 à 13, à moyen de laquelle la chambre (52) est reliée à un récipient de collecte.

15. Embrayage à disques à friction selon la revendication 14, **caractérisé en ce qu'**au moins une soupape (86) agencée selon les revendications 1 à 13 est disposée dans la partie circonférentielle, extérieure du point de vue radial, de l'embrayage et est conçue de telle sorte que dans le cas où aucune pression n'est présente dans la chambre (52), la soupape s'ouvre et permet un passage depuis la chambre (52) dans un récipient de collecte.

16. Embrayage à disques à friction selon la revendication 14 ou 15, **caractérisé en ce qu'**au moins une soupape (113) agencée selon les revendications 1 à 13 est disposée dans la partie, intérieure du point de vue radial, de l'embrayage et sert de soupape d'alimentation, qui, lorsque l'embrayage est fermé, permet l'amenée d'un lubrifiant depuis un récipient de collecte en direction de la chambre (52).

17. Embrayage à disques à friction selon l'une des revendications 14 à 16, **caractérisé en ce que** la au moins une soupape (86,113) est disposée dans la cloche d'embrayage rotative (34).
